# EUROPÄISCHE PATENTSCHRIFT

(11) **EP 1 924 945 B1**
(45) Veröffentlichungstag und Bekanntmachung des Hinweises auf die Patenterteilung: **11.11.2015**
(21) Anmeldenummer: 06791722.9
(22) Anmeldetag: 29.08.2006
(51) Int. Cl.: G06F 21/10, G06F 21/34, G06F 21/57, G06F 21/60, G06F 21/71, G06F 21/77

(54) **VERFAHREN ZUR VERBESSERUNG DER VERTRAUENSWÜRDIGKEIT VON ELEKTRONISCHEN GERÄTEN UND DATENTRÄGER DAFÜR**
METHOD FOR IMPROVING THE TRUSTWORTHINESS OF ELECTRONIC DEVICES AND DATA CARRIER THEREFOR
PROCEDE POUR AMELIORER LA FIABILITE D'APPAREILS ELECTRONIQUES ET SUPPORT DE DONNEES APPROPRIE

(30) Priorität: 30.08.2005 DE 102005041055
(43) Veröffentlichungstag der Anmeldung: 28.05.2008
(73) Patentinhaber: Giesecke & Devrient GmbH, 81677 München (DE)
(72) Erfinder: ENGLBRECHT, Erich, 85646 Anzing (DE); SPITZ, Stephan, 81245 München (DE); HINZ, Walter, 85748 Garching (DE)
(86) Internationale Anmeldenummer: PCT/EP2006/008460
(87) Internationale Veröffentlichungsnummer: WO 2007/025724

(56) Entgegenhaltungen:
- EP-A- 1 536 306
- WO-A-00/54125
- WO-A-00/54126
- WO-A-02/17048
- WO-A-2005/033914
- TRUSTED COMPUTING GROUP: "TCG Specification Architecture Overview" 28. April 2004 (2004-04-28), TRUSTED COMPUTING GROUP , XP002421643 Gefunden im Internet: URL:https://www.trustedcomputinggroup.org/ downloads/TCG_1_0_Architecture_Overview.pd f> Kapitel 4.5.3

## Beschreibung

Die Erfindung betrifft ein Verfahren zum Verbessern einer Vertrauenswürdigkeit eines elektronischen, digitalen Geräts mittels eines portablen Datenträgers, einen derartigen portablen Datenträger, insbesondere eine Chipkarte, sichere Multimediakarte, Mobilfunkkarte, ein USB-Speichermedium oder dergleichen, sowie ein System aus einem derartigen Gerät und einem derartigen Datenträger.

Elektronische, digitale Daten verarbeitende Geräte, wie zum Beispiel Personalcomputer, Notebooks, PDAs ("Personal Digital Assistents"), Mobilfunkgeräte und dergleichen werden vielfach durch ein als separater Chip an das Gerät gebundenes Sicherheitsmodul geschützt, welches dem Gerät eine Hardware-basierte und somit besonders manipulationssichere Sicherheitsinfrastruktur bereitstellt. Ein Beispiel eines derartigen Sicherheitsmoduls ist das "Trusted Platform Module" (TPM) der "Trusted Computing Group" (TCG), welches im Prinzip einem in das Gerät fest integrierten Chipkartenchip entspricht.

Ein solches Sicherheitsmodul ist ausgelegt, die Vertrauenswürdigkeit des Geräts zu überprüfen und gegenüber Kommunikationspartnern des Geräts auszuweisen. Dazu kann das Sicherheitsmodul die Hardware- und/ oder Softwarekonfiguration des Geräts anhand einer von ihm im Rahmen des "Hochfahrens" des Geräts ("Booten") berechneten eindeutigen Integritätskennung überprüfen und Manipulationen, beispielsweise durch Computerviren, trojanische Pferde oder andere Computerschädlinge, oder nichtvertrauenswürdige Komponenten erkennen (siehe "TCG Specification - Architecture Overview" Revision 1.2 2004). Im Sicherheitsmodul können zusätzlich kryptographische Schlüssel und Kennwörter sowie andere sicherheitsrelevante oder wertvolle Daten gesichert hinterlegt werden.

TPM-ähnliche Sicherheitsmodule prüfen die Systemintegrität eines elektronischen Geräts, indem geräteneutrale und benutzerneutraler Daten des Geräts erhoben, ausgewertet und weitergegeben werden, welche eine Identifizierung des Geräts oder des Benutzers nicht gestatten. Solche gerätegebundene Daten, die aufgrund ihrer Beschaffenheit oder über ihr Vorliegen in dem Sicherheitsmodul eindeutig dem Gerät zugeordnet sind, können somit zwar die Vertrauenswürdigkeit des Geräts gegenüber Dritten ausweisen, sie ermöglichen jedoch keinen Rückschluss auf das konkrete Gerät und insbesondere auf dessen Benutzer. Die systembedingte Anonymität ist jedoch im Hinblick auf eine Ende-zu-Ende-Sicherheit nachteilig und aus Sicherheitsgründen bei vielen Anwendungen häufig unerwünscht, da die Anonymität ein Integrieren von Benutzerdaten in das Konzept der Vertrauenswürdigkeit, z.B. in Form von Benutzerprivilegien, erschwert und prinzipiell ein Übernehmen fremder Identitäten durch einen unberechtigten Benutzer ermöglicht, z.B. durch unberechtigtes Verwenden fremder Kennwörter und dergleichen.

Es ist bekannt, eine Zugangsbeschränkung zu einem elektronischen Gerät durch die Überprüfung von auf einer Chipkarte gespeicherten Authentisierungsdaten oder Kennwörtern vorzunehmen und so einen unberechtigten Zugriff auf fremde sicherheitsrelevante und/ oder identitätsbezogene Daten zu verhindern. In diesem Zusammenhang schlägt die WO 2005/048087 A1 vor, Identitätsdaten eines Benutzers eines Computers ausschließlich in verschlüsselter Form auf einer Chipkarte zu speichern, wodurch ein unberechtigter Zugriff auf die Identitätsdaten, z.B. durch Ausspähen von Tastaturanschlägen oder Monitorausgaben, verhindert wird. Die Vertrauenswürdigkeit des Computers und die Integrität seiner Daten wird hierdurch jedoch nicht sichergestellt.

Die EP 1159 662 B1 offenbart ein Verfahren zum Prüfen der Vertrauenswürdigkeit eines mit einem Sicherheitsmodul ausgestatteten Computers durch einen Benutzer mittels eines vertrauenswürdigen, portablen Datenträgers. Das Verfahren wird durch den Computer initiiert. Eine Prüfung der Vertrauenswürdigkeit findet nicht statt, wenn der Computer die Prüfung z.B. aufgrund einer Manipulation durch einen Computerschädling nicht veranlassen kann. Die Sicherheit und Vertrauenswürdigkeit des Computers hängt also von dessen kooperativer und korrekter Funktionsweise ab. Ähnliche Lösungen zeigen WO02/17048, WO 00/541126, WO0054125 und WO2005/033914.

EP 1 536 306 A1 zeigt die Merkmale des Oberbegriffes der unabhängigen Ansprüche.

Der Erfindung liegt daher die Aufgabe zugrunde, die Vertrauenswürdigkeit eines durch ein Sicherheitsmodul geschützten elektronischen Geräts zu verbessern.

Diese Aufgabe wird erfindungsgemäß mittels eines Verfahrens und Vorrichtungen mit den Merkmalen der nebengeordneten Ansprüche gelöst. In davon abhängigen Ansprüchen sind vorteilhafte Ausgestaltungen und Weiterbildungen der Erfindung angegeben.

Erfindungsgemäß wird zwischen einem elektronischen Gerät, welches ein Sicherheitsmodul mit darin gespeicherten gerätegebundenen Daten umfasst, und einem portablen Datenträger mit benutzergebundenen Daten, welche aufgrund ihrer Beschaffenheit und/oder über den Besitz des Datenträgers eindeutig dem Benutzer des Datenträgers zugeordnet sind, eine Kommunikationsverbindung aufgebaut, die es dem Datenträger ermöglicht, eine Kommunikation mit dem Gerät von sich aus aktiv einzuleiten. Über diese Kommunikationsverbindung veranlasst der Datenträger aktiv ein Verknüpfen von auf dem Datenträger gespeicherten benutzergebundenen Daten und im Sicherheitsmodul des Geräts gespeicherten gerätegebundenen Daten. Es bedarf also weder zum Aufbau der Kommunikationsverbindung noch zur Verknüpfung der Daten einer Initiierung, Aufforderung oder sonstigen Veranlassung durch das Gerät, da der Datenträger zu einem von ihm oder von seinem Benutzer bestimmten Zeitpunkt von sich aus eine Kommunikation initiieren kann.

Bei dieser Verknüpfung werden benutzergebundene und gerätegebundene Daten derart miteinander verglichen oder abgeglichen, verifiziert, einander zugeordnet oder anderweitig miteinander verknüpft, dass eine Vertrauenswürdigkeitskette als eindeutige, verifizierbare, logische Verbindung zwischen dem Datenträger und dem Gerät geprüft und/oder hergestellt wird. Hierbei ergibt sich aufgrund der vielfältigen, flexiblen Verknüpfungsmöglichkeiten von gerätegebundenen und benutzergebundenen Daten ein breites Anwendungsspektrum zur Implementierung unterschiedlicher Sicherheitskonzepte auf Basis des vorliegenden erfinderischen Prinzips.

Aus sicherheitstechnischer Sicht werden bei dieser Verknüpfung benutzergebundene Daten, die aufgrund ihrer Beschaffenheit und/ oder über den Datenträgerbesitz eindeutig dem Benutzer des Datenträgers zugeordnet sind, und gerätegebundene Daten, die aufgrund ihrer Beschaffenheit oder über ihr Vorliegen in dem Sicherheitsmodul eindeutig dem Gerät zugeordnet sind, derart miteinander eindeutig verbunden oder gegeneinander geprüft, dass eine lückenlose Ende-zu-Ende-Sicherheit von dem über die benutzergebundenen Daten identifizierbaren Benutzer zu dem Gerät, dessen Systemintegrität über die gerätegebundenen Daten sichergestellt ist, und möglicherweise weiter zu Kommunikationspartnern des Geräts hergestellt wird.

Da die Kommunikationsverbindung derart aufgebaut wird, dass der Datenträger als Kommunikations-Master und das Gerät als Kommunikations-Slave agieren, , kann die Prüfung nicht von dem Gerät gesteuert oder veranlasst werden. Der Datenträger repräsentiert somit eine unabhängige Prüfinstanz, die von dem zu prüfenden Gerät physikalisch getrennt und insofern schwerer zu korrumpieren ist.

Als elektronische Geräte sieht die vorliegende Erfindung besonders solche Geräte vor, die digitale Medien verarbeiten können, insbesondere Personalcomputer, Notebooks, Mobiltelefone, PDAs, Mulimedia-fähige Konsolen und Terminals und dergleichen mehr. Derartige elektronische Geräte können als Sicherheitsmodul ein TPM nach der Spezifikation der TCG aufweisen, welches einen besonders sicheren Speicher für die gerätegebundenen Daten umfasst. Der mit diesem elektronischen Gerät zu verbindende portable Datenträger ist vorzugsweise eine mit einem Prozessor ausgestattete Chipkarte, sichere Multimediakarte, Mobilfunkkarte, ein USB-Token oder dergleichen mit der Möglichkeit eine Netzwerkschnittstelle zu emulieren.

Der portable Datenträger und das elektronische Gerät treten vorzugsweise in eine gleichberechtigte, bidirektionale Kommunikationsverbindung ein, wobei eine auf dem portablen Datenträger vorhandene und von dessen Prozessor ausführbare Sicherheitsapplikation die benutzergebundenen Daten des Datenträgers und die gerätegebundenen Daten des Sicherheitsmoduls durch Interaktion mit dem Gerät verknüpft oder eine Verknüpfung veranlasst.

Die Aufgabe des Geräts besteht hierbei in erster Linie darin, dass eine auf dem Gerät lauffähige Server-Applikation, insbesondere einen privilegierten Betriebssystemprozess, eine Schnittstelle geschaffen wird über die das Sicherheitsmodul zugreifen kann. Über die Schnittstelle dieser Server-Applikation können Anfragen an das Gerät vom portablen Datenträger gerichtet werden. Aufgrund dieser Veranlassung überträgt die Sicherheitsapplikation Daten an den portablen Datenträger. Hierbei wird die - Kommunikationsverbindung zwischen Datenträger und Gerät vorzugsweise über Nachrichten auf Basis des TCP/IP-Protokolls abgewickelt, während die übertragenen Datenpakete gesichert übertragen werden, vorzugsweise gemäß dem SSL/TSL-Protokoll. Vorzugsweise sind die über TCP/IP versendeten Anfragen vom Datenträger an das Gerät im XML-Format kodiert. Die Antwort kann ebenfalls mit Hilfe der Extended Markup Language (XML) strukturiert sein. Eine Sicherung mit Hilfe von XML-Verschlüsselung und XML-Signaturen kann parallel oder optional zu einer SSL/TLS-Sicherung eingesetzt werden.

Eine Möglichkeit der Verknüpfung von gerätegebundenen und benutzergebundenen Daten ist deren Vergleich, etwa um eine Zugriffsberechtigung des Benutzers oder eine Zugriffserlaubnis des Geräts zu verifizieren. Hierbei liegen auf dem Datenträger benutzergebundene Vergleichsdaten vor, die mit entsprechenden, im Sicherheitsmodul vorliegenden gerätegebundenen Daten auf Veranlassung der Sicherheitsapplikation des Datenträgers verglichen werden. Der Vergleich kann sowohl auf dem Gerät als auch auf dem Datenträger stattfinden. Es ist jedoch bevorzugt, dass die gerätegebundenen Daten von der Sicherheitsapplikation bei der privilegierten Betriebssystemroutine angefordert werden und diese die angeforderten Daten aus dem Sicherheitsmodul ausliest und an den Datenträger zum dortigen Vergleich mit den benutzergebundenen Daten durch die Sicherheitsapplikation überträgt. Der Vergleich kann beispielsweise ausgeführt werden, sobald der portable Datenträger mit dem Gerät verbunden wird oder der Benutzer einen Zugriffsversuch auf das Gerät unternimmt. Die Gewährung oder Verweigerung des Zugriffs kann dann entweder von der Sicherheitsapplikation selbst vorgenommen werden oder mittels eines entsprechenden Freigabesignals an die Betriebssystemroutine auf dem Gerät veranlasst werden. Falls ein Vergleich von der Betriebssystemroutine durchgeführt wird, erteilt diese bei positivem Ergebnis ihrerseits ein Freigabesignal an den Datenträger.

Als zu vergleichende Daten kommen insbesondere Authentisierungsdaten, welche eindeutig dem Datenträger zuzuordnen sind, Identitätsdaten, welche eindeutig dem Benutzer zuzuordnen sind, oder Integritätsdaten, welche eindeutig dem Gerät bzw. seiner Hardware-/Softwarekonfiguration zuzuordnen sind, in Frage. In einem Registrierungsprozess können die benutzergebundenen Vergleichsdaten und/ oder die entsprechenden gerätegebundenen Daten erhoben und auf dem Datenträger und/oder in dem Sicherheitsmodul hinterlegt werden. Während die Authentisierungs- und Identitätsdaten alle auf das Gerät zugriffsberechtigten Datenträger/Benutzer auf dem Gerät ausweisen, weisen die Integritätsdaten, welche in der Regel bei jedem Booten des Geräts neu berechnet werden, alle Geräte aus, auf die ein Datenträger/Benutzer zugreifen darf. Die Authentisierungsdaten können z.B. bestimmte Serien- oder Produktnummern des Datenträgers repräsentieren, während die Identitätsdaten z.B. benutzerindividuelle biometrische Daten des Benutzers sein können.

Nach einem Vergleich von gerätegebundenen Daten mit benutzergebundenen Vergleichsdaten kann der Sicherheitsapplikation des Datenträgers auch ein Zugriff auf weitere gerätegebundene Daten in dem Sicherheitsmodul gewährt werden. Dies kann beispielsweise bei der Datensicherung von bestimmten gerätegebundenen Daten oder deren Migration/Portierung auf ein anderes Gerät sinnvoll sein, wie z.B. im Falle von digitalen Rechten eines DRM-Systems ("Digital Rights Management"), welche in dem Sicherheitsmodul abgelegt sind. Solche gerätegebundenen Daten können zusätzlich z.B. mit den Vergleichsauthentisierungs- und/oder -identitätsdaten irreversibel benutzer- und/oder datenträgerindividuell markiert (z.B. verschlüsselt oder signiert) werden, um ein Kopieren oder Migrieren nur bestimmten Benutzern oder nur auf bestimmte Datenträger zu gestatten. Der Datenträger kann sich somit über seine benutzergebundenen Vergleichsdaten gegenüber dem Gerät als migrations- oder kopierberechtigtes Gerät ausweisen.

Üblicherweise errechnet ein Sicherheitsmodul (oder eine mit ihm interagierende Sicherheitssoftware auf dem Gerät) beim Booten des Geräts aus Hardwarekonfigurations- und/oder Softwarekonfigurationsdaten Integritätsdaten des Geräts. Die im Sicherheitsmodul liegenden Integritätsdaten können dann verwendet werden, um eine Systemintegrität des Geräts oder die Zertifizierung von dessen Hardware- und/oder Softwarekomponenten zu prüfen.

Im Rahmen der vorliegenden Erfindung ist es möglich, dass die Sicherheitsapplikation des Datenträgers die Integritätsdaten des Geräts alleine oder zusammen mit den Konfigurationsdaten über die Betriebssystemroutine des Geräts anfordert, aus den empfangenen Konfigurationsdaten seinerseits Prüfintegritätsdaten errechnet und diese mit den auf dem Datenträger vorliegenden Vergleichsintegritätsdaten und/ oder den empfangenen Integritätsdaten vergleicht, um entweder die Vertrauenswürdigkeit der Systemkonfiguration des Geräts zu prüfen und/ oder die Integritätsdaten des Geräts zu verifizieren. Eine derartige Prüfung der Vertrauenswürdigkeit des Geräts kann von dem Datenträger jederzeit veranlasst werden.

Eine weitere Möglichkeit der Verknüpfung ist die Herstellung einer Zuordnung von gerätegebundenen und benutzergebundenen Daten. Eine solche Zuordnung kann von der Sicherheitsapplikation in Form einer Zuordnungstabelle sowohl im Speicher des Geräts als auch auf dem Datenträger veranlasst werden. Als in einer Zuordnungstabelle niederzulegende gerätegebundene Daten kommen neben den bereits erwähnten Datentypen weitere anwendungsbezogene Daten in Frage, z.B. gerätegebundene Verbindungsdaten, die eindeutig einer Datenkommunikationsverbindung zwischen dem Gerät und einer Drittinstanz (z.B. einem Server oder einem E-Commerce-Portal im Internet) oder der Drittinstanz selbst zuzuordnen sind. Das Anlegen der Zuordnungstabelle und das Zuordnen von benutzergebundenen Identitäts- oder Authentisierungsdaten kann von der Sicherheitsapplikation des Datenträgers veranlasst werden, wenn der Datenträger mit dem elektronischen Gerät verbunden wird oder wenn ein Zugriff auf eine Resource des Geräts, z.B. eine Datenkommunikationsverbindung, stattfindet, oder das Anlegen der Tabelle und Zuordnen der Daten wird aufgrund eines entsprechenden Benachrichtigungssignals von einer Drittinstanz oder dem Gerät veranlasst.

Insbesondere wird eine solche Zuordnungstabelle angelegt, wenn eine anonyme gesicherte Kommunikationsverbindung von dem elektronischen Gerät zu einer Drittinstanz aufgebaut wird, beispielsweise um deren Dienstleistung bei einem Server über ein Computernetz in Anspruch zu nehmen. Bei Bedarf kann über die Zuordnungstabelle die Identität desjenigen Benutzers ermittelt werden, der die Dienstleistung in Anspruch genommen hat. Diese Offenlegung der Identität eines Benutzers fördert die Sicherheit des Gesamtsystems, da so die Verantwortlichkeit für Transaktionen nachvollziehbar wird.

Die Ermittlung der Identitätsdaten des Benutzers kann dann sowohl von dem Gerät als auch von der Drittinstanz ausgehen, beispielsweise zu Abrechnungszwecken. Falls die Zuordnungstabelle auf dem elektronischen Gerät abgelegt ist, kann eine entsprechende Offenlegungsanfrage einer Drittinstanz direkt von der Betriebssystemroutine des Geräts bearbeitet werden, oder sie kann von der Betriebssystemroutine an die Sicherheitsapplikation des Datenträgers weitergeleitet werden, d.h. sie kann von der Drittinstanz über das Gerät als Router direkt an die Sicherheitsapplikation gerichtet werden.

Falls die Zuordnungstabelle in einem Speicher des elektronischen Geräts angelegt ist, kann sie entweder die einander zugeordneten gerätegebundenen und benutzergebundenen Daten unmittelbar enthalten oder sie enthält statt der physikalischen Identitätsdaten Verweise ("Links") auf benutzergebundene Daten auf dem Datenträger oder auf gerätegebundene Daten in dem Sicherheitsmodul des Geräts. Beim Auslesen der Zuordnungstabelle müssen solche Verweise aufgelöst werden, zum Beispiel indem die Betriebssystemroutine des Geräts oder die Drittinstanz ein Verweisauflösungssignal an die Sicherheitsapplikation des Datenträgers übermittelt, welche die entsprechenden benutzergebundenen Daten an die Betriebssystemroutine des Geräts oder an die Drittinstanz zurückschickt.

Falls die Zuordnungstabelle im Datenträger angelegt ist, liegen die gerätegebundenen und benutzergebundenen Daten vorzugsweise direkt in dem Datenträger vor und können unmittelbar an die Betriebssystemroutine des Geräts oder an die Drittinstanz übertragen werden.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: einen erfindungsgemäßen portablen Datenträger und ein elektronisches Gerät, die eine Kommunikationsverbindung unterhalten;
- Figur 2: ein Flussdiagramm eines erfindungsgemäßen Verfahrens;
- Figur 3: eine Darstellung eines erfindungsgemäßen Authentisierungs- und Identifikationsverfahrens;
- Figur 4: eine Darstellung eines erfindungsgemäßen Verfahrens zur Prüfung der Vertrauenswürdigkeit eines elektronischen Geräts durch einen Datenträger; und

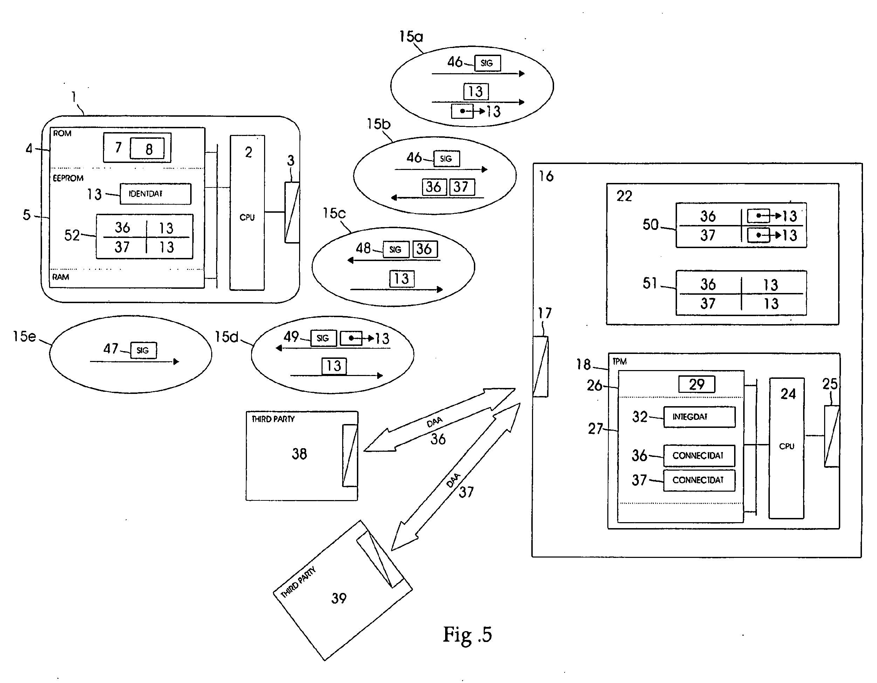

- Figur 5: eine Darstellung eines erfindungsgemäßen Verfahrens zum Verwalten und Offenlegen einer Identität einer anonymen Verbindung eines Geräts zu einer Drittinstanz.

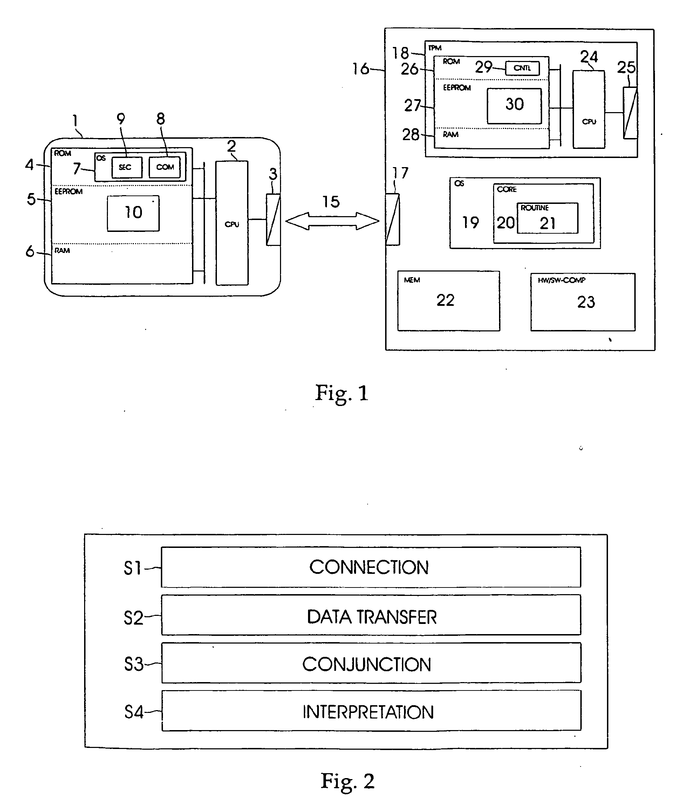

Figur 1 zeigt eine Chipkarte 1, welche als erfindungsgemäßer portabler Datenträger ausgestaltet ist, in Interaktion mit einem elektronischen Gerät 16. Das elektronische Gerät 16 kann hierbei prinzipiell jede beliebige elektronische Einrichtung sein, die befähigt ist, digitale Daten und Medien zu verarbeiten, z.B. ein handelsüblicher Personalcomputer, ein Notebook, ein digitales Video- oder Audiogerät, Spielkonsolen und dergleichen. Im weiteren wird ohne Beschränkung der Allgemeinheit angenommen, dass es sich bei dem elektronischen Gerät 16 um einen herkömmlichen netzwerkfähigen Computer handelt.

Der Computer 16 ist mit einem Betriebssystem 19 als Steuereinrichtung ausgestattet. Das Betriebssystem 19 umfasst einen Betriebssystemkern 20, der unter anderem eine sicherheitsrelevante, privilegierte Betriebssytemroutine 21 umfasst, welche eingerichtet ist, auf ein in den Computer integriertes Sicherheitsmodul 18 zuzugreifen. Desweiteren umfasst der Computer 19 einen Speicher 22 zum Speichern digitaler Daten, z.B. einen herkömmlichen Festplätten- oder Cache-Speicher. Im Speicher 22 ist z.B. das Betriebssystems 20 sowie weitere Applikationen, Programme und digitale Daten abgelegt. Darüberhinaus weist der Computer 16 diverse Hardware- und Softwarekomponenten 23 auf, z.B. übliche Computerhardware oder spezielle Multimedia-Hardware sowie die übliche System- und Anwendungssoftware eines Computers und eventuell spezielle Multimediasoftware.

Zusätzlich zu den erwähnten herkömmlichen Komponenten eines elektronischen medienverarbeitenden digitalen Geräts umfasst der Computer 16 ein Sicherheitsmodul 18, das in Figur 1 als "Trusted Platform Module" (TPM) ausgestaltet ist und im folgenden ohne Beschränkung der Allgemeinheit als solches bezeichnet wird. Das TPM-Modul 18 ist eine separate Hardwarekomponente des Computer 16, die sämtliche für einen eigenständigen Betrieb notwendige Hard- und Softwarekomponenten umfasst und als herkömmlicher Chipkarten-Chip realisiert ist, der auf der Hauptplatine des Computers 16 angebracht ist. Das TPM-Modul 18 umfasst einen eigenen Prozessor 24 und eine Speicherhierarchie, bestehend aus einem permanenten ROM-Speicher 26, einem wiederbeschreibbaren EEPROM-Speicher 27 und einem flüchtigen RAM-Arbeitsspeicher 28, sowie eine Kommunikationsschnittstelle 25 zum Nachrichten- und Datenaustausch mit dem Computer 16.

Im EEPROM-Speicher 27 des TPM-Moduls 18 sind besonders sicherheitsrelevante, gerätegebundene Daten 30 abgelegt, wie z.B. kryptographische Schlüssel, Kennwörter, digitale Zertifikate oder Softwarelizenzen, welche dort vor Manipulationen von außen weitestgehend geschützt sind. Desweiteren umfasst das TPM-Modul 18 eine Steuerapplikation 29, die als Systemsoftware im ROM-Speicher 26 abgelegt ist. Das TPM-Modul 18 stellt besondere Sicherheitsfunktionalitäten zur Absicherung des Computers 16 und von dessen Operationen bereit, sowie zum Prüfen und Ausweisen der Systemintegrität und Vertrauenswürdigkeit des Computers 16 gegenüber Dritten. Übliche Funktionen eines TPM-Moduls sind in diesem Zusammenhang z.B. das Binden von beliebigen Daten an die genaue Systemkonfiguration eines Computers 16 ("Sealing"), das Ausweisen einer von dem Gerät 16 ausgehenden Kommunikation als vertrauenswürdig ("Attestation") oder das Bereitstellen eines sicheren Zufallsgenerators. Da alle diese Funktionen auf einem separaten Hardware-Chip realisiert sind, sind sie durch Softwaremanipulationen von außen; beispielsweise durch Computerschädlinge wie Viren, Trojaner, Würmer oder dergleichen, nicht korrumpierbar, anders als beispielsweise ähnliche Funktionen die auf dem Computer 16 mittels installierter Software realisiert werden.

Eine weitere wichtige Funktion des TPM-Moduls 18 ist das sogenannte vertrauenswürdige oder authentifizierende Hochfahren ("Trusted/ Authenticated Boot") des Computers 16. Hierbei werden beim Hochfahren Integritätsdaten des Computers 16 ermittelt, die eindeutige Hashwerte der genauen Hardware- und/oder Sofware-Konfiguration 23 des Computers 16 repräsentieren und die deshalb dem Computer 16 solange eindeutig zuzuordnen sind, wie dessen Konfiguration 23 unverändert bleibt. Insbesondere wird der Betriebssystemkern 20, der zentrale und sicherheitsrelevante Funktionen des Betriebssystems 19, wie z.B. die privilegierte Betriebssystemroutine 21, zusammenfasst, von dem TPM-Modul 18 gegen Manipulation abgesichert.

Der Messvorgang der Systemzustände und/oder Konfiguration des Computers 18 im Rahmen dieses sicheren Hochfahres wird von einer spezialisierten Software außerhalb des TPM-Moduls 18 durchgeführt, dem im BIOS ("Basic Input/Output System") des Computers 16 integrierten CRTM ("Core Root of Trusts Measurement"), welches die resultierenden Integritätsdaten des Computers 16 als gerätegebundene Daten 30 in dem EEPROM-Speicher 27 des TPM-Moduls 18 hinterlegt. Mit diesen Integritätsdaten können z.B. von dem Computer 16 ausgehende Datenkommunikationen signiert und insofern dem Computer 16 eindeutig zugeordnet werden. Ebenso ist es möglich, anhand der Integritätsdaten intern zu beurteilen, ob eine Veränderung oder unerwünschte Manipulation an der Hardware- und/ oder Softwarekonfiguration 23 des Computers 16 stattgefunden hat, so dass ein Benutzer gegebenenfalls gewarnt werden kann oder der Computer 16 in einen sicheren Zustand überführt wird, falls die Konfiguration 23 als unbekannt und somit zunächst als unsicher klassifiziert wird. Insgesamt hat das TPM-Modul 18 die Aufgabe, die Vertrauenswürdigkeit des Computers 16 zu überprüfen und gegenüber dessen Kommunikationspartnern auszuweisen.

Die Chipkarte 1 umfasst einen Prozessor 2, eine Datenkommunikationsschnittstelle 3 zur Kommunikation 15 mit dem Computer 16 über dessen Datenkommunikationsschnittstelle 17, sowie eine Speicherhierarchie, bestehend aus einem permanenten ROM-Speicher 4, einem wiederbeschreibbaren EEPROM-Speicher 5 und einem flüchtigen RAM-Arbeitsspeicher 6.

Während die gerätegebundenen Daten 30 im TPM-Modul 18 an den Computer 16 gebunden sind, umfasst die Chipkarte 1 in ihrem EEPROM-Speicher 5 benutzergebundene Daten 10, welche für den Benutzer sicherheitsrelevante Daten repräsentieren und an den Benutzer der Chipkarte 1 oder die Chipkarte 1 selbst gebunden sind. Ein Betriebssystem 7 der Chipkarte 1 steuert die sicherheitsrelevanten Funktionalitäten der Chipkarte 1 und umfasst insbesondere eine Sicherheitsapplikation 9 und eine Kommunikationsroutine 8. Selbstverständlich können die Sicherheitsapplikation 9 und die Kommunikationsroutine 8 auch als betriebssystemunabhängige Applikationen ausgestaltet und im EEPROM-Speicher 5 abgelegt sein.

Üblicherweise verläuft die Kommunikation 15 zwischen einer Chipkarte 1 und einem mit einer Kartenleseeinrichtung ausgestatteten Terminal nach bestimmten für Chipkarten (oder auch für Mobilfunkkarten) standardisierten Datenübertragungsprotokollen, wie z.B. dem T=0 oder T=1 Protokoll. Die Grundlagen der Datenübertragung bei Chipkarten sind im "Handbuch der Chipkarten", W. Rankl, W. Effing, Hanser-Verlag, 2002 beschrieben.

Die Chipkartenkommunikation wird dabei im Master-Slave-Verfahren betrieben, wobei ein Kartenterminal als "Master" eine Kommunikation anstößt und die Chipkarte als "Slave" lediglich als reaktive Komponente auf die Anfragen des Kartenterminals antworten kann. Die jeweiligen Kommunikationseinheiten dieses "Ping-Pong-Spiels" zwischen Chipkarte und Kartenterminal, die als APDU ("Application Protocol Data Units") bezeichnet werden, sind dementsprechend von dem Kartenterminals ausgehende Kommando-APDUs und hierauf reagierende Antwort-APDUs der Chipkarte.

Die vorliegenden Erfindung geht jedoch davon aus, dass die Master-Slave-Kommunikation für die bereitgestellten Sicherheitsfunktionalitäten ungeeignet ist, da ein zusätzlicher Sicherheitsgewinn dadurch erreicht werden kann, dass eine Prüfung der Vertrauenswürdigkeit des Computers 16 von der Chipkarte 1 als externer Komponente eigenständig veranlasst werden kann, indem sie als aktiver oder gleichberechtigter Kommunikationspartner in eine entsprechende Kommunikationsverbindung 15 mit dem Computer 16 eintritt. Auf diese Weise kann eine Prüfung auch durchgeführt werden, wenn der Computer 16 diese nicht explizit veranlasst oder dazu gar nicht in der Lage ist, beispielsweise wenn er von einem Computerschädling infiziert ist, welcher bestimmte Sicherheitsfunktionen des Computers 16 ausschaltet. Aus diesem Grund ist das Kommunikationsprotokoll, nach welchem die Kommunikation 15 durchgeführt wird, kein herkömmliches Chipkarten-Datenübertragungsprotokoll, sondern vorzugsweise ein gleichberechtigtes Kommunikationsprotokoll, und besonders bevorzugt das TCP/IP-Protokoll. Eine solche gleichberechtigte Kommunikationsverbindung 15 mit dem Computer 16 wird auf Chipkartenseite von der Kommunikationsroutine 8 aufgebaut und derart betrieben, dass die Sicherheitsapplikation 9 eine erfindungsgemäße Prüfung selbständig und aktiv durch Interaktion mit dem Computer 16 veranlassen kann. Zusätzlich wird die gesamte Datenkommunikation 15 zwischen Chipkarte 1 und Computer 16 kryptographisch gesichert, vorzugsweise gemäß dem SSL/TSL-Protokoll.

Über die gleichberechtigte Kommunikationsverbindung 15 wird erfindungsgemäß ein Verknüpfen von dem Computer 16 zugeordneten gerätegebundenen Daten 30 mit den dem Benutzer zugeordneten benutzergebundenen Daten 10 vorgenommen. Durch die Möglichkeit, gerätegebundene und benutzergebundene Daten 30,10 auf flexible Art und Weise zu verknüpfen, können verschiedene Sicherheitsaspekte und -anforderungen implementiert werden. Es können insbesondere Vertrauenswürdigkeitsprüfungen des Computers 16 durchgeführt werden, Zugangsberechtigungen und - erlaubnisse der Chipkarte 1 oder Benutzers verifiziert werden oder Verantwortlichkeiten über eine lückenlose Rückverfolgung von Identitätsdaten aufgebaut und geklärt werden. Die Verknüpfung von benutzergebundenen und gerätegebundenen Daten 10, 30 ermöglich insofern eine Ende-zu-Ende-Sicherheit, ausgehend von den Benutzer, über seine Chipkarte 1 und den Computer 16 bis zu einem Kommunikationspartner des Computers 16 im Internet, z.B. einem E-Commerce-Server.

Figur 2 zeigt den groben Ablauf eines erfindungsgemäßen Verfahrens. In Schritt S1 wird zunächst die Datenkommunikationsverbindung 15 zwischen der Chipkarte 1 und dem Computer 16 derart hergestellt (CONNECTION), dass die Chipkarte 1 eine Kommunikation aktiv durchführen und die nachfolgend beschriebene erfindungsgemäße Prüfung eigenständig veranlassen kann. In Schritt S2 wird der für die nachfolgende Verknüpfung von gerätegebundenen Daten 30 und benutzergebundenen Daten 10 notwendige Datentransfer vorgenommen (DATA TRANSFER), indem benutzergebundene Daten 10 von der Chipkarte 1 an den Computer 16 übertragen werden und/oder gerätegebundene Daten 30 von dem Computer 16 an die Chipkarte 1 übertragen werden. Unabhängig von der Richtung der Datenübertragung kann diese von der Sicherheitsapplikation 9 der Chipkarte 1 über die Kommunikationsroutine 8 veranlasst werden, indem entweder zunächst benutzergebundene Daten 10 unangefordert an den Computer 16 übertragen werden oder ein Anforderungssignal von der Chipkarte 1 an den Computer 16 übertragen wird, welches den Computer 16 anweist, gerätegebundenen Daten 30 an die Chipkarte 1 zu übertragen.

In Schritt S3 wird anschließend die Verknüpfung der entsprechenden benutzergebundenen und gerätegebundenen Daten 10, 30 entweder auf die Chipkarte 1 oder auf dem Computer 16 vorgenommen (CONJUNCTION) und das Ergebnis dieser Verknüpfung in Schritt S4 im Hinblick auf die zu realisierende Sicherheitsfunktionalität interpretiert (INTERPRETATION). Nachfolgend werden einige Ausführungsbeispiele von Prüfverfahren und zusätzlichen Sicherheitsfunktionen beschrieben, deren Umsetzung die vorliegende Erfindung ermöglicht.

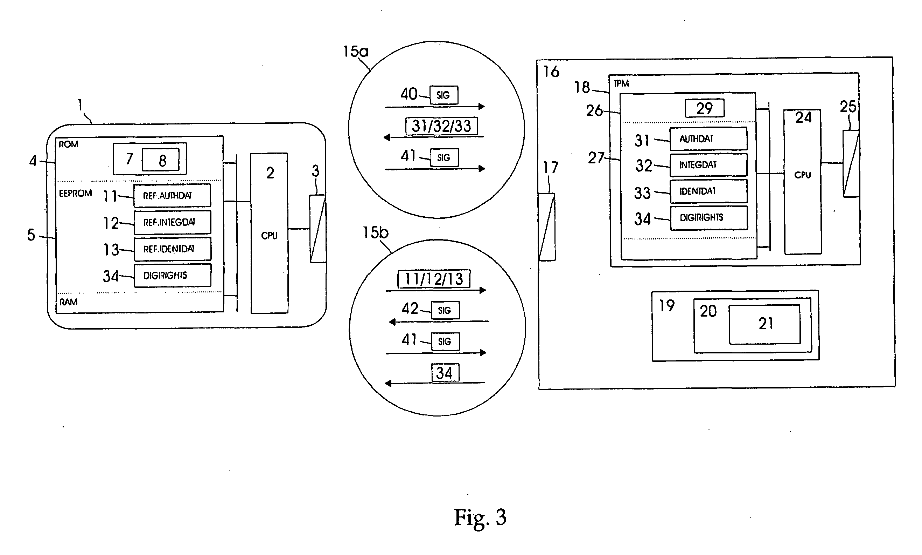

Figur 3 zeigt mehrere Varianten eines Ausführungsbeispiels der vorliegenden Erfindung, bei dem auf einer Chipkarte 1 als benutzergebundene Daten 10 Vergleichsauthentisierungsdaten 11 (REF.AUTHDAT) und/oder Vergleichsintegritätsdaten 12 (REF.INTEGDAT) und/oder Vergleichsidentitätsdaten 13 (REF.IDENTDAT) gespeichert sind, während in dem TPM-Modul 18 des Computers 16 als gerätegebundene Daten 30 Authentisierungsdaten 31 (AUTHDAT) und/oder Integritätsdaten 32 (INTEGDAT) und/oder Identitätsdaten 33 (IDENTDAT) sowie digitale Rechte 34 (DIGIRIGHTS) gespeichert sind. Das Ziel des in Figur 3 illustrierten Ausführungsbeispiels ist es, einen Zugang eines Benutzer der Chipkarte 1 und/ oder der Chipkarte 1 selbst zu dem Computer 16 und /oder zu in dem TPM-Modul 18 gespeicherten gerätegebundenen Daten 30 zu prüfen.

Das Grundprinzip dieser Zugangsprüfung besteht in dem Vergleichen von im EEPROM-Speicher 5 der Chipkarte 1 abgelegten benutzergebundenen Vergleichsdaten 11,12,13 und im TPM-Modul 18 des Geräts 16 abgelegten gerätegebundenen Daten 31, 32, 33. Der prinzipielle Unterschied besteht zunächst allein darin, dass die zu vergleichenden Daten 11/31,12/32,13/33 von unterschiedlicher Qualität sind. Darüber hinaus ist es möglich, dass die entsprechenden Vergleiche der benutzergebundenen Vergleichsdaten 11, 12, 13 und der gerätegebundenen Daten 31, 32,33 sowohl auf der Chipkarte 1 als auch von dem Gerät 16 durchgeführt werden können.

Die beiden Kreisdiagramme der Figur 3 repräsentieren unterschiedliche Kommunikationsabläufe 15a, 15b dieses Ausführungsbeispiels. Falls der Vergleich von der Chipkarte 1 durchgeführt wird (15a), überträgt die Chipkarte 1 ein Signal 40 an den Computer 16 sobald die Chipkarte 1 über eine entsprechende Kartenleseeinrichtung an den Computer 16 angeschlossen wird. Mit dem Signal 40 wird die im abgesicherten Kern 20 des Betriebssystems 19 liegende Betriebssystemroutine 21 auffordert, entsprechende gerätegebundene Daten 31, 32, 33 aus dem TPM-Modul 18 auszulesen und an die Chipkarte 1 zu übertragen. Andernfalls (15b) kann die Sicherheitsapplikation 8 der Chipkarte 1 die benutzergebundenen Vergleichsdaten 11,12,13 direkt an den Computer 16 zum dortigen Vergleichen durch die Betriebssystemroutine 21 übertragen.

Die gesicherte Betriebssystemroutine 21 ist besonders privilegiert, indem sie auf den sicheren Speicherbereich des TPM-Moduls 18 zugreifen und dort gerätegebundene Daten 31, 32, 33 zum Vergleich mit entsprechenden benutzergebundenen Vergleichsdaten 11,12,13 auslesen kann und diese an die Chipkarte 1 übertragen kann. Bei einem erfolgreichen Vergleich wird dies entweder durch ein entsprechendes Freigabesignal 41 von der Sicherheitsapplikation 8 der Betriebssystemroutine 21 mitgeteilt (15a), oder das positive Vergleichsergebnis wird von der Betriebssystemroutine 21 an die Chipkarte 1 mit einem Freigabesignal 42 gemeldet (15b).

Die Authentisierungsdaten 31 bzw. Vergleichsauthentisierungsdaten 11 repräsentieren hierbei z.B. besondere Chipkarten-bezogene Kennzahlen, die die Chipkarte 1 eindeutig identifizieren, und welche in einem Registrierungsprozess im sicheren Speicher des TPM-Moduls 18 abgelegt wurden. Die Authentisierungsdaten 31 kennzeichnen also all jene portablen Datenträger, die berechtigt sind, auf den Computer 16 zuzugreifen. Die Integritätsdaten 32 bzw. Vergleichsintegritätsdaten 12 repräsentieren demgegenüber besondere Kennungen, die den Computer 16 eindeutig identifizieren, zum Beispiel die beim Hochfahren des Geräts 16 aus dessen Hardware- und Software-Konfiguration 23 errechneten Integritätsdaten. Die Vergleichsintegritätsdaten 12 werden in einem Registrierungsprozess in den Speicher 5 der Chipkarte 1 geschrieben, so dass die Chipkarte 1 für jeden Computer 16, auf den sie zugreifen kann, einen Satz von Vergleichsintegritätsdaten 12 umfasst. Die Identitätsdaten 33 und Vergleichsidentitätsdaten 13 identifizieren als dritte Möglichkeit den Benutzer selbst, beispielsweise in Form von nur dem Benutzer bekannten und einzugebenden Zugangskennungen oder biometrischen Daten, wie zum Beispiel Fingerabdrücke oder Irismuster. Bei einer biometrischen Identifizierung des Benutzers kann es zweckmäßig sein, die biometrischen Daten vor einem Zugriff auf den Computer 16 mittels geeigneter Sensoren zu erheben, in biometrische Identifikationsdaten 33 zu transformieren und im TPM-Modul 18 zum späteren Vergleich mit den Vergleichsidentitätsdaten 12 der Chipkarte abzulegen.

Ein TPM-Modul 18 kann neben den bisher erwähnten Daten noch weitere gerätegebundene Daten vorhalten, welche möglicherweise direkt mit einzelnen Hardware- oder Softwarekomponenten des Geräts verbunden sind. Hierzu gehören insbesondere digital vorliegende Software- oder Hardwarelizenzen oder -zertifikate oder digitale Rechte 34 an digitalen Medien und Inhalten, wie zum Beispiel Video- oder Audiodateien, welche im Rahmen einer digitalen Rechteverwaltung (DRM; "Digital Rights Management") in dem TPM-Modul 18 sicher hinterlegt sind.

Durch das in Figur 3 skizzierte Verfahren ermöglicht die vorliegende Erfindung auch eine Datensicherung bzw. Migration von digitalen Rechten 34 oder anderen übertragbaren gerätegebundenen Daten. Eine Migration von gerätegebundenen Daten wird insbesondere dann durchgeführt, wenn der Computer 16 zwar nicht mehr weiter verwendet werden soll, wohl aber die in seinem TPM-Modul 18 vorliegenden digitalen Rechte 34 und möglichen anderen Lizenzen und Zertifikate zur Weiterbenutzung auf einen anderen Computer übertragen werden sollen. Ein Benutzer einer Chipkarte 1, die sich auf die oben beschriebene Weise mittels Vergleich von Authentisierungsdaten 11, 31, Integritätsdaten 12, 32 oder Identitätsdaten 13, 33 autorisiert hat, ist dann berechtigt, die digitalen Rechte 34 aus dem TPM-Modul 18 in dem Speicher 5 der Chipkarte 1 abzuspeichern.

Dies wird dadurch realisiert, dass die Sicherheitsapplikation 8 ein entsprechendes Anforderungssignal 41 an die Betriebssystemroutine 21 richtet (15b), welche die digitalen Rechte 34 aus dem Speicher 27 des TPM-Moduls 18 entnimmt und an die Chipkarte 1 überträgt. Der Zugriff auf digitale Rechte 34 von einer Chipkarte 1 kann zusätzlich an bestimmte benutzergebundene Daten 11,12,13 irreversibel gebunden sein, so dass nur bestimmte Benutzer oder Chipkarten 1 berechtigt sind diese zu kopieren, beispielsweise nur derjenige Benutzer, der die digitalen Rechte 34 ursprünglich erworben hat. Eine weitere Möglichkeit ist, die bei bestimmten digitalen Rechten 34 ohnehin mögliche Migration von Daten von einem TPM-Modul 18 zu einem anderen TPM-Modul durchzuführen, indem sich die Chipkarte 1 durch Vorweisen entsprechender benutzergebundener Daten gegenüber der gesicherten Geräteumgebung selbst als berechtigte, gesicherte Umgebung ausgibt.

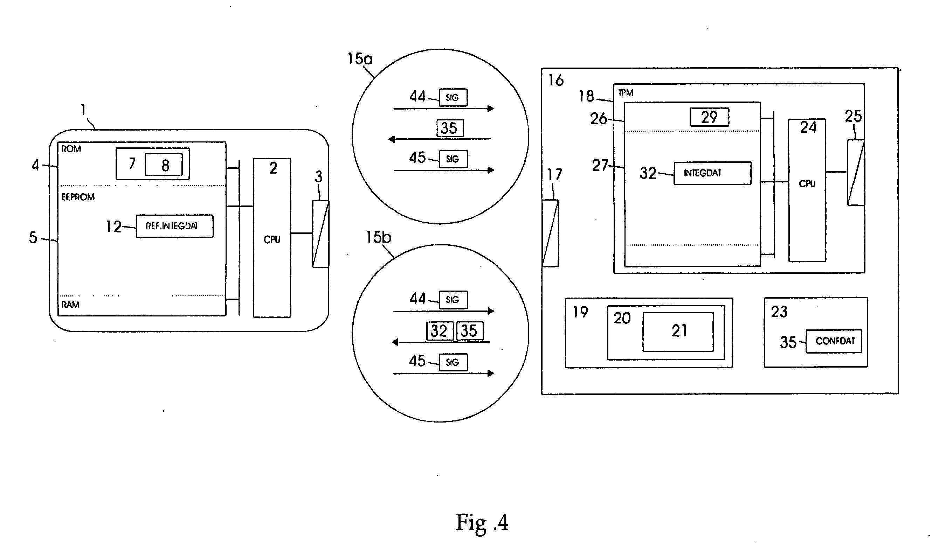

Figur 4 zeigt ein Ausführungsbeispiel der vorliegenden Erfindung in Form von zwei alternativen Kommunikationsdiagrammen 15a, 15b, bei dem die Integrität des Computers 16 durch die Chipkarte 1 geprüft wird. Wie bereits erläutert, umfasst der Computer 16 zusammen mit dem TPM-Modul 18 eine spezialisierte CTRM-Software, welche beim Hochfahren des Computers 16 eine Messung über einzelne Systemzustände und/ oder die Systemkonfigurationsdaten 35 des Computers 16 vornimmt und die Ergebnisse als Integritätsdaten 32 in dem TPM-Modul 18 hinterlegen. Die Möglichkeit einer Integritätsprüfung durch die Chipkarte 1 ergibt sich daraus in zweifacher Weise: Einerseits kann die Sicherheitsapplikation 8 die Konfigurationsdaten 35 mittels eines entsprechenden Signals 44 anfordert, ihrerseits zu Prüfintegritätsdaten transformieren und mit den vorliegenden Vergleichsintegritätsdaten 12 vergleichen (15a). Andererseits kann die Sicherheitsapplikation 8 mittels des Signals 44 sowohl die Konfigurationsdaten 35 als auch die von der CRTM-Software berechneten Integritätsdaten 32 anfordern, aus den Konfigürationsdaten 35 Prüfintegritätsdaten errechnen und diese mit den empfangenen Integritätsdaten 32 vergleichen (15b). Im erstgenannten Fall (15a) prüft die Chipkarte 1 die Vertrauenswürdigkeit der Systemkonfiguration 23, während im zweiten Fall (15b) die Berechnung der Integritätsdaten 32 durch die CRTM-Software verifiziert wird. Derartige Prüfungen können bei der vorliegenden Erfindung jederzeit auf Veranlassung der Sicherheitsapplikation oder des Benutzers durchgeführt werden und nicht nur, wie bei der TPM-Spezifikation von der TCG vorgesehen, beim Hochfahren des Computers 16.

Eine gängige Funktionalität des TPM-Moduls 18 ist der Aufbau einer gesicherten, anonymen Kommunikationsverbindung 36,37 (eines sog. Tunnels) zwischen dem Computer 16 und einer externen Drittinstanz 38, 39. Eine solche anonyme Kommunikationsverbindung wird auch als DAA ("Direct Anonymous Attestation") bezeichnet, da der Computer 16 mit Hilfe eines komplexen mathematischen Verfahrens einer Drittinstanz 38, 39 seine Vertrauenswürdigkeit nachweisen kann, ohne eine vertrauenswürdige dritte Partei zur Attestierung einschalten zu müssen. Ein DAA-Tunnel 36, 37 ist per se rechnerneutral und benutzerneutral, so dass die Drittinstanz 38, 39 zwar die Vertrauenswürdigkeit des Computers 16 verifizieren kann, jedoch weder den Computer 16 noch den Benutzer der Chipkarte 1 als Initiator des DAA-Tunnels 36, 37.

Der prinzipielle Vorteil der Anonymität einer derartigen Kommunikationsverbindung 36, 37 kann für bestimmte Transaktionen, insbesondere geschäftliche Vorgänge im Rahmend des E-Commerce, hinderlich sein, da ab einem bestimmten Zeitpunkt einer DAA-Kommunikation 36, 37 ein Offenlegen der Benutzeridentität erforderlich ist, beispielsweise um Rechnungs- oder Vertragsdaten zu erheben.

Dazu werden benutzergebundene Daten 10 und gerätegebundene Daten 30 mittels einer gleichberechtigten Kommunikation entweder auf der Chipkarte 1 (15a) oder auf dem Computer 16 (15b) einander zugeordnet. Ein Offenlegen der Identität einer DAA-Verbindung 36, 37 wird dann durch Auflösen der Zuordnung erreicht (15c, 15d, 15e).

Zu diesem Zweck wird entweder in einem Speicher 22 des Computers 16 oder in dem EEPROM-Speicher 5 der Chipkarte 1 eine Zuordnungstabelle 50, 51, 52 angelegt, in welcher Verbindungsdaten 36, 37 mit benutzergebundenen Identitätsdaten 13 der Chipkarte 1 verknüpft werden. Das Anlegen einer solchen Zuordnungstabelle 50, 51, 52 wird als erfindungsgemäßer Verknüpfungsschritt von der Sicherheitsapplikation 8 der Chipkarte 1 durch ein Signal 46 veranlasst (15a, 15b) und kann entweder bereits zu einem Zeitpunkt erfolgen, zu dem die Chipkarte 1 eine Kommunikationsverbindung mit dem Computer 16 eingeht, oder erst dann, wenn eine gesicherte anonyme DAA-Verbindung 36,37 zu einer Drittinstanz 38, 39 aufgebaut wird, beispielsweise aufgrund eines entsprechenden Benachrichtigungssignals von dem Computer 16 oder der Drittinstanz 38, 39.

Je nach Art der Zuordnungstabelle 50, 51, 52 werden nach der Übertragung des Signals 46 entweder Identitätsdaten 13 oder Verweise auf Identitätsdaten 13 (z.B. in Form von Speicheradressen der Speicherbereiche im EEPROM-Speicher 5, in welchen die Identitätsdaten 13 liegen) von der Sicherheitsapplikation 8 an den Computer 16 übertragen, um dort in einer Tabelle 50, 51 niedergelegt zu werden (15a). Die entsprechenden Zuordnungstabellen 50, 51 können dann entweder in einem herkömmlichen Speicher 22, in dem TPM-Modul 18 oder in einem durch das TPM-Modul 18 besonders gesicherten Speicherbereich des Computers 16 angelegt werden. Alternativ können auf Veranlassung der Sicherheitsapplikation 8 Verbindungsdaten 36,37 von der privilegierten Betriebssystemroutine 21 an die Chipkarte 1 übertragen werden, um dort in eine Tabelle 52 im EEPROM-Speicher 5 eingetragen zu werden (15b).

Die in der Zuordnungstabelle 50, 51, 52 eingetragenen gerätegebundenen Daten brauchen nicht notwendigerweise Verbindungsdaten 36, 37 sein, sondern können beliebige gerätegebundene Daten sein, die mit Identitätsdaten 13 eines Benutzers zu beliebigen Zwecken verknüpft werden sollen. Beispielsweise kann mit einer Zuordnungstabelle 50, 51, 52 auch eine spezifische Zugriffsrechteverwaltung aufgebaut werden, indem Applikationsdaten oder digitale Rechte, Lizenzen oder Zertifikate, welche Nutzungsrechte an Software- oder Hardwarekomponenten des Computers 16 repräsentieren, bestimmten über ihre Chipkarte 1 identifizierbaren Benutzern zugeordnet werden.

Ein Anfragesignal zur Offenlegung der einer Kommunikationsverbindung 36, 37 zugeordneten Benutzeridentität 13 kann von der Drittinstanz 38, 39 an den Computer 16 und dort eventuell an die privilegierte Betriebssystemroutine 21 gerichtet werden (15c, 15d), oder direkt über den dann als Router fungierenden Computer 16 an die Chipkarte 1 zur dortigen Bearbeitung übertragen werden (15e).

Falls die Offenlegungsanfrage der Drittinstanz 38, 39 an den Computer 16 erfolgt, kann dieser im Falle einer Zuordnungstabelle 51 die Offenlegung autonom durchführen, indem die entsprechenden Identitätsdaten 13 aus der Tabelle 51 ausgelesen und an die Drittinstanz 38, 39 weitergemeldet werden. Im Falle einer auf der Chipkarte 1 angelegten Zuordnungstabelle 52 (15c) oder falls die Zuordnungstabelle 50 lediglich Verweise auf Identitätsdaten 13 besitzt, die physikalisch auf der Chipkarte 1 liegen (15d), wird ein entsprechendes die Verbindungsdaten 36, 37 umfassendes Anfragesignal 48 (15c) oder ein den Verweis umfassendes Anfragesignal 49 (15d) an die Sicherheitsapplikation 9 gerichtet ,die anschließend die angeforderten Identitätsdaten 13 an den Computer 16 und weiter an die Drittinstanz 38, 39 überträgt. Falls der Computer 16 bei einer Offenlegungsanfrage einer Drittinstanz 38, 39 jedoch lediglich als Router fungiert, wird das Offenlegen der Identität des Benutzers von der Sicherheitsapplikation 9 dadurch initiiert, dass entweder die entsprechenden Identitätsdaten 13 an den Computer 16 oder direkt an die Drittinstanz 38, 39 übertragen werden oder ein Aufforderungssignal 47 an den Computer 16 übertragen wird (15e), welches diesen anweist, die entsprechenden Identitätsdaten 13 an die Drittinstanz 38, 39 weiterzumelden.

## Patentansprüche

1. Verfahren zum Verbessern einer Vertrauenswürdigkeit eines elektronischen Geräts (16), welches ein Sicherheitsmodul (18) mit darin gespeicherten gerätegebundenen Daten (30; 31, 32, 33) umfasst, mittels benutzergebundenen Daten (10; 11,12,13) eines Benutzers des Geräts (16), umfassend den Schritt des Aufbauens (S1) einer Kommunikationsverbindung (15) zwischen einem mit dem Gerät (16) verbundenen portablen Datenträger (1), in welchem die benutzergebundenen Daten (10; 11,12,13) gespeichert sind, und dem Gerät (1), wobei
das Aufbauen (S1) der Kommunikationsverbindung (15) derart erfolgt, dass der Datenträger (1) eine Kommunikation (15a, 15b, 15c, 15d, 15e) aktiv selbst initiieren kann (S2), und ein Schritt des Verknüpfens (S3) der benutzergebundenen Daten (10; 11,12,13) und der gerätegebundenen Daten (30; 31,32,33) mittels der vom Datenträger (1) initiierten Kommunikation (15a, 15b, 15c, 15d, 15e) realisiert ist,
dass das vom Datenträger (1) initiierte Aufbauen der Kommunikationsverbindung (15) ein Senden einer initialen Nachricht der Kommunikationsverbindung (15) von dem Datenträger (1) an das Gerät (16) umfasst,
dass über die Kommunikationsverbindung (15) die Kommunikation (15a, 15b, 15c, 15d, 15e) gemäß dem TCP/IP-Protokoll erfolgt, **dadurch gekennzeichnet,**
**dass** der portable Datenträger eine Chipkarte, eine sichere Multimediakarte, eine Mobilfunkkarte oder ein USB-Speichermedium ist, und
**dass** die benutzergebundenen Daten (10; 11,12,13) Integritätsdaten (12) umfassen, welche eine Hardware-Konfiguration (23) und/oder Software-Konfiguration (23) des Geräts (16) eindeutig identifizieren.

2. Verfahren nach Anspruche 1, **dadurch gekennzeichnet, dass** die Kommunikation (15a, 15b, 15c, 15d, 15e) kryptographisch gesichert wird, insbesondere durch das SSL/TSL-Protokoll.

3. Verfahren nach einem der Ansprüche 1 oder 2, **dadurch gekennzeichnet, dass** über die Kommunikationsverbindung (15) mittels der vom Datenträger (1) aktiv durchgeführten Kommunikation (15a, 15b, 15c, 15d, 15e) benutzergebundene Daten (10; 11, 12, 13) von dem Datenträger (1) an das Gerät (16) übertragen werden und/oder gerätegebundene Daten (30; 31,32,33) aus dem Sicherheitsmodul (18) des Geräts (16) von dem Datenträger (1) angefordert werden.

4. Verfahren nach einem der Ansprüche 1 bis 3, **dadurch gekennzeichnet, dass** beim Schritt des Verknüpfens (S3) in dem Sicherheitsmodul (18) gespeicherte, gerätegebundene Daten (30; 31, 32, 33) mit auf dem Datenträger (1) gespeicherten, benutzergebundenen Vergleichsdaten (10; 11, 12, 13) verglichen werden, insbesondere gerätegebundene Authentisierungsdaten (31), welche den Datenträger (1) eindeutig identifizieren, mit benutzergebundenen Vergleichsauthentisierungsdaten (11) und/ oder gerätegebundene Identitätsdaten (33), welche eine Identität des Benutzers eindeutig ausweisen, mit benutzergebundenen Vergleichsidentitätsdaten (13) und/oder gerätegebundene Integritätsdaten (32), welche eine Hardware-Konfiguration (23) und/oder Software-Konfiguration (23) des Geräts (16) eindeutig identifizieren, mit den benutzergebundenen Integritätsdaten (12) als Vergleichsintegritätsdaten.

5. Verfahren nach Anspruch 4, **dadurch gekennzeichnet, dass** dem Benutzer ein Zugriff auf das Gerät (16) und/ oder dem Datenträger (1) ein Zugriff auf in dem Sicherheitsmodul (18) des Geräts (16) gespeicherte gerätegebundene Daten (30; 31, 32, 33; 34) gestattet wird, falls die verglichenen gerätegebundenen Daten (30; 31, 32, 33) und benutzergebundenen Vergleichsdaten (10; 11, 12, 13) übereinstimmen.

6. Verfahren nach Anspruch 5, **dadurch gekennzeichnet, dass** die gerätegebundenen Daten (30; 31, 32, 33, 34) digitale Rechte (34) umfassen und der Datenträger (1) die gerätegebundenen Daten (30; 31, 32, 33) auf den Datenträger (1) kopiert.

7. Verfahren nach einem der Ansprüche 1 bis 3, **dadurch gekennzeichnet, dass** beim Schritt des Verknüpfens (S3) von gerätegebundenen Daten (30) und benutzergebundenen Daten (10) in dem Sicherheitsmodul (18) gespeicherte, gerätegebundene Integritätsdaten (32) des Geräts (16), welche die Hardware-Konfiguration (23) und/oder Software-Konfiguration (23) des Geräts (16) eindeutig identifizieren und/oder die auf dem Datenträger (1) gespeicherten, benutzergebundenen Vergleichsintegritätsdaten (12) mit Prüfintegritätsdaten verglichen werden, welche aus Hardware-Konfigurationsdaten (35) und/ oder Software-Konfigurationsdaten (35) des Geräts (16) auf dem Datenträger (1) berechnet werden.

8. Verfahren nach einem der Ansprüche 4 bis 7, **dadurch gekennzeichnet, dass** der Schritt des Verknüpfens (S3) von gerätegebundenen Daten (30) und benutzergebundenen Daten (10) von dem Datenträger (1) veranlasst wird und die benutzergebundenen Vergleichsdaten (10; 11,12,13) und die gerätegebundenen Daten (30; 31, 32, 33) auf dem Datenträger (1) verglichen werden.

9. Verfahren nach einem der Ansprüche 1 bis 3, **dadurch gekennzeichnet, dass** beim Schritt des Verknüpfens (S3) gerätegebundene Daten (30; 31, 32, 33) des Sicherheitsmoduls (18) und benutzergebundene Daten (10; 11,12,13, 14) des Datenträgers (1) einander zugeordnet werden.

10. Verfahren nach Anspruch 9, **dadurch gekennzeichnet, dass** das Zuordnen durch Anlegen einer Zuordnungstabelle (50,51) in einem Speicher (22) des Geräts (16) erfolgt, indem die gerätegebundenen Daten (30; 31, 32, 33) oder Verweise auf gerätegebundene Daten (30; 31, 32, 33) entweder benutzergebundenen Daten (10; 11, 12, 13) zugeordnet werden, welche von dem Datenträger an das Gerät (16) übertragen werden, oder Verweisen auf benutzergebundene Daten (10; 11, 12, 13) zugeordnet werden, welche auf dem Datenträger (1) liegen.

11. Verfahren nach Anspruch 9, **dadurch gekennzeichnet, dass** das Zuordnen durch Anlegen einer Zuordnungstabelle (52) auf dem Datenträger (1) erfolgt, indem die benutzergebundenen Daten (10; 11, 12, 13) gerätegebundenen Daten (30; 31, 32, 33) zugeordnet werden, welche von dem Datenträger (1) bei dem Gerät (16) angefordert werden.

12. Verfahren nach einem der Ansprüche 9 bis 11, **dadurch gekennzeichnet, dass** Identitätsdaten (13), welche die Identität des Benutzers eindeutig ausweisen, den gerätegebundenen Daten (30; 31, 32, 33) als benutzergebundene Daten (10) zugeordnet werden.

13. Verfahren nach einem der Ansprüche 9 bis 12, **dadurch gekennzeichnet, dass** Integritätsdaten (32) des Geräts (16), welche eine Hardware-Konfiguration (32) und/oder Software-Konfiguration (23) des Geräts (16) eindeutig identifizieren, den benutzergebundenen Daten (10; 11, 12, 13) als gerätegebundene Daten (30; 31, 32, 33) zugeordnet werden.

14. Verfahren nach einem der Ansprüche 9 bis 13, **dadurch gekennzeichnet, dass** die Zuordnung erfolgt, wenn eine anonyme Kommunikationsverbindung (36, 37) zwischen dem Gerät (16) und einer Drittinstanz (38, 29) aufgebaut wird.

15. Verfahren nach Anspruch 14, **dadurch gekennzeichnet, dass** Verbindungsdaten (36, 32), welche die anonyme Kommunikationsverbindung (36, 37) und/ oder die Drittinstanz (38, 39) eindeutig identifizieren, den benutzergebundenen Daten (10; 11,12,13) als gerätegebundene Daten (30; 31,32,33) zugeordnet werden.

16. Portabler Datenträger (1) umfassend einen Prozessor (2), einen Speicher (5), in welchem benutzergebundene Daten (10; 11,12,13) eines Benutzers des Datenträgers (1) gespeichert sind, eine Kommunikationsschnittstelle (3) und eine von dem Prozessor (2) ausführbare Kommunikationsroutine (8) zum Betreiben einer Kommunikationsverbindung (15) mit einem ein Sicherheitsmodul (18) umfassenden elektronischen Gerät (16) über die Kommunikationsschnittstelle (3), wobei die Kommunikationsroutine (8) eingerichtet ist, die Kommunikationsverbindung (15) derart zu betreiben, dass der Datenträger (1) eine Kommunikation (15a, 15b, 15c, 15d, 15e) aktiv initiieren kann, und durch eine von dem Prozessor (2) ausführbare Sicherheitsapplikation (9), welche eingerichtet ist, die benutzergebundenen Daten (10; 11,12,13) und die gerätegebundenen Daten (30; 31,32,33) mittels der vom Datenträger gesteuerten Kommunikation (15a, 15b, 15c, 15d, 15e) zu versenden, dadurch gekennezeichnet, dass der portable Datenträger eine Chipkarte, eine sichere Multimediakarte, eine Mobilfunkkarte oder ein USB-Speichermedium ist, dass die benutzergebundenen Daten (10; 11,12,13) Integritätsdaten (12) umfassen, welche eine Hardware-Konfiguration (23) und/oder Software-Konfiguration (23) des Geräts (16) eindeutig identifizieren und dass der Datenträger eingerichtet ist zur Ausführung eines Verfahrens nach einem der Ansprüche 1 bis 15.

17. System umfassend einen portablen Datenträger (1) nach Anspruche 16 und ein elektronisches Gerät (16), umfassend einen Speicher (22), eine Kommunikationsschnittstelle (17), über welche das Gerät (16) in eine Kommunikationsverbindung (15) mit dem Datenträger (1) eintreten kann, und ein gerätegebundene Daten (30; 31, 32, 33) umfassendes Sicherheitsmodul (18), **dadurch gekennzeichnet, dass** das Gerät (16) eingerichtet ist, eine Kommunikationsverbindung (15) mit dem Datenträger (1) derart zu betreiben, dass der Datenträger (1) eine Kommunikation (15a, 15b, 15c, 15d, 15e) über die Kommunikationsverbindung (15) initiieren kann, um einen Austausch von gerätegebundenen Daten (30; 31, 32, 33) und benutzergebundenen Daten (10; 11,12,13) des Datenträgers (1) mittels der von dem Datenträger (1) gesteuerten Kommunikation (15a, 15b, 15c, 15d, 15e) zu ermöglichen.

## Claims

1. A method for improving a trustworthiness of an electronic device (16) that comprises a security module (18) with device-bound data (30; 31, 32, 33) stored therein, by means of user-bound data (10; 11, 12, 13) of a user of the device (16), comprising the step of setting up (S1) a communication connection (15) between a portable data carrier (1) connected to the device (16) and the device (1), the user-bound data (10; 11, 12, 13) being stored in said portable data carrier, wherein
the setup (S1) of the communication connection (15) is effected in such a fashion that the data carrier (1) can actively initiate (S2) itself a communication (15a, 15b, 15c, 15d, 15e), and a step of linking (S3) the user-bound data (10; 11, 12, 13) and the device-bound data (30; 31, 32, 33) is realized by means of the communication (15a, 15b, 15c, 15d, 15e) initiated by the data carrier (1),
the setup of the communication connection (15) initiated by the data carrier (1) comprises a transmission of an initial message of the communication connection (15) from the data carrier (1) to the device (16),
the communication (15a, 15b, 15c, 15d, 15e) via the communication connection (15) is effected according to the TCP/IP protocol,
**characterized in that**
the portable data carrier is a chip card, a secure multimedia card, a mobile communication card or a USB storage medium, and
that the user-bound data (10; 11, 12, 13) comprise integrity data (12) which uniquely identify a hardware configuration (23) and/or software configuration (23) of the device (16).

2. The method according to claim 1, **characterized in that** the communication (15a, 15b, 15c, 15d, 15e) is cryptographically secured, in particular by the SSL/TSL protocol.

3. The method according to any of the claims 1 or 2, **characterized in that**, by means of the communication (15a, 15b, 15c, 15d, 15e) actively carried out by the data carrier (1) via the communication connection (15), user-bound data (10; 11, 12, 13) are transferred from the data carrier (1) to the device (16) and/or device-bound data (30; 31, 32, 33) are requested from the security module (18) of the device (16) by the data carrier (1).

4. The method according to any of the claims 1 to 3, **characterized in that** in the step of linking (S3) device-bound data (30; 31, 32, 33) stored in the security module (18) are compared to user-bound comparative data (10; 11, 12, 13) stored on the data carrier (1), in particular device-bound authentication data (31) which uniquely identify the data carrier (1) to user-bound comparative authentication data (11) and/or device-bound identity data (33) which uniquely indicate an identity of the user to user-bound comparative identity data (13) and/or device-bound integrity data (32) which uniquely identify a hardware configuration (23) and/or software configuration (23) of the device (16) to the user-bound integrity data (12) as comparative integrity data.

5. The method according to claim 4, **characterized in that** the user is granted access to the device (16) and/or the data carrier (1) is granted access to device-bound data (30; 31, 32, 33) stored in the security module (18) of the device (16), if the compared device-bound data (30; 31, 32, 33) and the user-bound comparative data (10; 11, 12, 13) correspond to each other.

6. The method according to claim 5, **characterized in that** the device-bound data (30; 31, 32, 33, 34) comprise digital rights (34) and the data carrier (1) copies the device-bound data (30; 31, 32, 33) to the data carrier (1).

7. The method according to any of the claims 1 to 3, **characterized in that** in the step of linking (S3) device-bound data (30) and user-bound data (10), device-bound integrity data (32) of the device (16) stored in the security module (18), said integrity data uniquely identifying the hardware configuration (23) and/or software configuration (23) of the device (16), and/or the user-bound comparative integrity data (12) stored on the data carrier (1) are compared to verification integrity data computed from hardware configuration data (35) and/or software configuration data (35) of the device (16) on the data carrier (1).

8. The method according to any of the claims 4 to 7, **characterized in that** the step of linking (S3) device-bound data (30) and user-bound data (10) is prompted by the data carrier (1) and the user-bound comparative data (10; 11, 12, 13) and the device-bound data (30; 31, 32, 33) on the data carrier (1) are compared.

9. The method according to any of the claims 1 to 3, **characterized in that** in the step of linking (S3) device-bound data (30; 31, 32, 33) of the security module (18) and user-bound data (10; 11, 12, 13) of the data carrier (1) are mutually allocated.

10. The method according to claim 9, **characterized in that** the allocation is effected by drawing up an allocation table (50, 51) in a memory (22) of the device (16), by allocating the device-bound data (30; 31, 32, 33) or references to device-bound data (30; 31, 32, 33) either to user-bound data (10; 11, 12, 13) transferred from the data carrier to the device (16) or to references to user-bound data (10; 11, 12, 13) disposed on the data carrier (1).

11. The method according to claim 9, **characterized in that** the allocation is effected by drawing up an allocation table (52) on the data carrier (1), by allocating the user-bound data (10; 11, 12, 13) to device-bound data (30; 31, 32, 33) requested by the data carrier (1) from the device (16).

12. The method according to any of the claims 9 to 11, **characterized in that** identity data (13) uniquely indicating the identity of the user are allocated to the device-bound data (30; 31, 32, 33) as user-bound data (10).

13. The method according to any of the claims 9 to 12, **characterized in that** integrity data (32) of the device (16) uniquely identifying a hardware configuration (32) and/or software configuration (23) of the device (16) are allocated to the user-bound data (10; 11, 12, 13) as device-bound data (30; 31, 32, 33).

14. The method according to any of the claims 9 to 13, **characterized in that** the allocation is effected when an anonymous communication connection (36, 37) is set up between the device (16) and a third entity (38, 29).

15. The method according to claim 14, **characterized in that** connection data (36, 37) uniquely identifying the anonymous communication connection (36, 37) and/or the third entity (38, 39) are allocated to the user-bound data (10; 11, 12, 13) as device-bound data (30; 31, 32, 33).

16. A portable data carrier (1) comprising a processor (2), a memory (5) in which user-bound data (10; 11, 12, 13) of a user of the data carrier (1) are stored, a communication interface (3) and a communication routine (8) executable by the processor (2) for operating a communication connection (15) with an electronic device (16) comprising a security module (18) via the communication interface (3), wherein the communication routine (8) is adapted to so operate the communication connection (15) that the data carrier (1) can actively initiate a communication (15a, 15b, 15c, 15d, 15e), and by a security application (9) executable by the processor (2), said security application being adapted to send the user-bound data (10; 11, 12, 13) and the device-bound data (30; 31, 32, 33) by means of the communication (15a, 15b, 15c, 15d, 15e) controlled by the data carrier, **characterized in that** the portable data carrier is a chip card, a secure multimedia card, a mobile communication card or a USB storage medium, that the user-bound data (10; 11, 12, 13) comprise integrity data (12) uniquely identifying a hardware configuration (23) and/or software configuration (23) of the device (16) and that the data carrier is adapted to execute a method according to any of the claims 1 to 15.

17. A system comprising a portable data carrier (1) according to claim 16 and an electronic device (16) comprising a memory (22), a communication interface (17) via which the device (16) can enter into a communication connection (15) with the data carrier (1), and a security module (18) comprising device-bound data (30; 31, 32, 33), **characterized in that** the device (16) is adapted to so operate a communication connection (15) with the data carrier (1) that the data carrier (1) can initiate a communication (15a, 15b, 15c, 15d, 15e) via the communication connection (15) in order to make possible an exchange of device-bound data (30; 31, 32, 33) and user-bound data (10; 11, 12, 13) of the data carrier (1) by means of the communication (15a, 15b, 15c, 15d, 15e) controlled by the data carrier (1).

## Revendications

1. Procédé destiné à améliorer une fiabilité d'un appareil (16) électronique comprenant un module de sécurité (18) dans lequel sont mémorisées des données (30; 31, 32, 33) liées à l'appareil, au moyen de données (10; 11, 12, 13) liées à l'utilisateur d'un utilisateur de l'appareil (16), comprenant l'étape de l'établissement (S1) d'une connexion de communication (15) entre un support de données (1) portable connecté à l'appareil (16) et dans lequel les données (10; 11, 12, 13) liées à l'utilisateur sont mémorisées, et l'appareil (1), cependant que
l'établissement (S1) de la connexion de communication (15) a lieu de telle façon que le support de données (1) peut initier activement (S2) lui-même une communication (15a, 15b, 15c, 15d, 15e), et une étape de la liaison (S3) des données (10; 11, 12, 13) liées à l'utilisateur et des données (30; 31, 32, 33) liées à l'appareil est réalisée au moyen de la communication (15a, 15b, 15c, 15d, 15e) initiée par le support de données (1).
l'établissement, initié par le support de données (1), de la connexion de communication (15) comprend un envoi d'un message initial de la connexion de communication (15) du support de données (1) à l'appareil (16),
par le biais de la connexion de communication (15), la communication (15a, 15b, 15c, 15d, 15e) a lieu suivant le protocole TCP/IP, **caractérisé en ce que**
le support de données portable est une carte à puce, une carte de multimédia sécurisée, une carte de téléphonie mobile ou un support mémoire USB, et
les données (10; 11, 12, 13) liées à l'utilisateur comprennent des données d'intégrité (12) qui identifient univoquement une configuration matérielle (23) et/ou configuration logicielle (23) de l'appareil (16).

2. Procédé selon la revendication 1, **caractérisé en ce que** la communication (15a, 15b, 15c, 15d, 15e) est sécurisée par cryptographie, en particulier par le protocole SSL/TSL.

3. Procédé selon une des revendications 1 ou 2, **caractérisé en ce que**, par le biais de la connexion de communication (15), au moyen de la communication (15a, 15b, 15c, 15d, 15e) activement effectuée par le support de données (1), des données (10; 11, 12, 13) liées à l'utilisateur sont transmises du support de données (1) à l'appareil (16) et/ou des données (30; 31, 32, 33) du module de sécurité (18) de l'appareil (16) sont demandées par le support de données (1).

4. Procédé selon une des revendications de 1 à 3, **caractérisé en ce que**, lors de l'étape de la liaison (S3), des données (30; 31, 32, 33) liées à l'appareil mémorisées dans le module de sécurité (18) sont comparées avec des données de comparaison (10; 11, 12, 13) liées à l'utilisateur mémorisées sur le support de données (1), en particulier des données d'authentification (31) liées à l'appareil et authentifiant univoquement le support de données (1), avec des données d'authentification de comparaison (11) liées à l'utilisateur, et/ou des données d'identité (33) liées à l'appareil et montrant univoquement une identité de l'utilisateur, avec des données d'identité de comparaison (13) liées à l'utilisateur, et/ou des données d'intégrité (32) liées à l'appareil et identifiant univoquement une configuration matérielle (23) et/ou configuration logicielle (23) de l'appareil (16), avec les données d'intégrité (12) liées à l'utilisateur en tant que données d'intégrité de comparaison.

5. Procédé selon la revendication 4, **caractérisé en ce qu'**il est autorisé à l'utilisateur un accès à l'appareil (16) et/ou au support de données (1) un accès à des données (30; 31, 32, 33; 34) liées à l'appareil mémorisées dans le module de sécurité (18) de l'appareil (16) si les données (30; 31, 32, 33) liées à l'appareil comparées et les données de comparaison (10; 11, 12, 13) liées à l'utilisateur coïncident.

6. Procédé selon la revendication 5, **caractérisé en ce que** les données (30; 31, 32, 33, 34) liées à l'appareil comprennent des droits numériques (34) et **en ce que** le support de données (1) copie sur le support de données (1) les données (30; 31, 32, 33) liées à l'appareil.

7. Procédé selon une des revendications de 1 à 3, **caractérisé en ce que**, lors de l'étape de la liaison (S3) de données (30) liées à l'appareil et de données (10) liées à l'utilisateur, des données d'intégrité (32) liées à l'appareil de l'appareil (16) mémorisées dans le module de sécurité (18) et identifiant univoquement la configuration matérielle (23) et/ou configuration logicielle (23) de l'appareil (16) et/ou les données d'intégrité (12) de comparaison liées à l'utilisateur mémorisées sur le support de données (1) sont comparées avec des données d'intégrité de vérification qui sont calculées sur le support de données (1) à partir de données de configuration matérielle (35) et/ou données de configuration logicielle (35) de l'appareil (16).

8. Procédé selon une des revendications de 4 à 7, **caractérisé en ce que** l'étape de la liaison (S3) de données (30) liées à l'appareil et de données (10) liées à l'utilisateur est déclenchée par le support de données (1), et **en ce que** les données de comparaison (10; 11, 12, 13) liées à l'utilisateur et les données (30; 31, 32, 33) liées à l'appareil sont comparées sur le support de données (1).

9. Procédé selon une des revendications de 1 à 3, **caractérisé en ce que**, lors de l'étape de la liaison (S3), des données (30; 31, 32, 33) du module de sécurité (18) liées à l'appareil et des données (10; 11, 12, 13, 14) du support de données (1) liées à l'utilisateur sont affectées les unes aux autres.

10. Procédé selon la revendication 9, **caractérisé en ce que** l'affectation a lieu par création d'une table d'affectation (50, 51) dans une mémoire (22) de l'appareil (16), ce qui a lieu **en ce que** les données (30; 31, 32, 33) liées à l'appareil ou des renvois à des données (30; 31, 32, 33) liées à l'appareil sont affectés soit à des données (10; 11, 12, 13) liées à l'utilisateur qui sont transmises par le support de données à l'appareil (16), soit à des renvois à des données (10; 11, 12, 13) liés à l'utilisateur qui se trouvent sur le support de données (1).

11. Procédé selon la revendication 9, **caractérisé en ce que** l'affectation a lieu par création d'une table d'affectation (52) sur le support de données (1), ce qui a lieu **en ce que** les données (10; 11, 12, 13) liées à l'utilisateur sont affectées à des données (30; 31, 32, 33) liées à l'appareil qui sont demandées de la part de l'appareil (16) par le support de données (1).

12. Procédé selon une des revendications de 9 à 11, **caractérisé en ce que** les données d'identité (13) qui montrent univoquement l'identité de l'utilisateur sont affectées aux données (30; 31, 32, 33) liées à l'appareil en tant que données (10) liées à l'utilisateur.

13. Procédé selon une des revendications de 9 à 12, **caractérisé en ce que** les données d'intégrité (32) de l'appareil (16) qui identifient univoquement une configuration matérielle (32) et/ou configuration logicielle (23) de l'appareil (16) sont affectées aux données liées à l'utilisateur (10; 11, 12, 13) en tant que données (30; 31, 32, 33) liées à l'appareil.

14. Procédé selon une des revendications de 9 à 13, **caractérisé en ce que** l'affectation a lieu quand une connexion anonyme de communication (36, 37) entre l'appareil (16) et une instance tierce (38, 29) est établie.

15. Procédé selon la revendication 14, **caractérisé en ce que** des données de connexion (36, 37) qui identifient univoquement la connexion anonyme de communication (36, 37) et/ou l'instance tierce (38, 39) sont affectées aux données (10; 11, 12, 13) liées à l'utilisateur en tant que données (30; 31, 32, 33) liées à l'appareil.

16. Support de données (1) portable comprenant un processeur (2), une mémoire (5) dans laquelle des données (10 ; 11, 12, 13) liées à l'utilisateur d'un utilisateur du support de données (1) sont mémorisées, une interface de communication (3) et une routine de communication (8) exécutable par le processeur (2) pour l'exploitation d'une connexion de communication (15) avec un appareil (16) électronique comprenant un module de sécurité (18) par le biais de l'interface de communication (3), la routine de communication (8) étant configurée pour exploiter la connexion de communication (15) de telle manière que le support de données (1) peut initier activement une communication (15a, 15b, 15c, 15d, 15e), et par une application de sécurité (9) exécutable par le processeur (2) et configurée pour envoyer les données (10; 11, 12, 13) liées à l'utilisateur et les données (30; 31, 32, 33) liées à l'appareil au moyen de la communication (15a, 15b, 15c, 15d, 15e) commandée par le support de données, **caractérisé en ce que** le support de données portable est une carte à puce, une carte de multimédia sécurisée, une carte de téléphonie mobile ou un support mémoire USB,
que les données (10; 11, 12, 13) liées à l'utilisateur comprennent des données d'intégrité (12) qui identifient univoquement une configuration matérielle (23) et/ou configuration logicielle (23) de l'appareil (16) et que le support de données est configuré pour exécuter un procédé selon une des revendications de 1 à 15.

17. Système comprenant un support de données (1) portable selon la revendication 16 et un appareil (16) électronique, comprenant une mémoire (22), une interface de communication (17) par le biais de laquelle l'appareil (16) peut entrer dans une connexion de communication (15) avec le support de données (1), et un module de sécurité (18) comprenant des données (30; 31, 32, 33) liées à l'appareil, **caractérisé en ce que** l'appareil (16) est configuré pour exploiter de telle manière une connexion de communication (15) avec le support de données (1) que le support de données (1) peut initier une communication (15a, 15b, 15c, 15d, 15e) par le biais de la connexion de communication (15) afin de permettre un échange de données (30; 31, 32, 33) liées à l'appareil et de données (10; 11, 12, 13) du support de données (1) liées à l'utilisateur au moyen de la communication (15a, 15b, 15c, 15d, 15e) commandée par le support de données (1).
